# EUROPEAN PATENT SPECIFICATION

(11) **EP 4 370 781 B1**
(45) Date of publication and mention of the grant of the patent: **18.06.2025**
(21) Application number: 22747392.3
(22) Date of filing: 14.07.2022
(51) Int. Cl.: E21D 20/02, E21D 21/00

(54) **INTEGRATED DRILLING INJECTION AND EXTRACTION DEVICE AND METHOD**
INTEGRIERTE BOHRINJEKTIONS- UND EXTRAKTIONSVORRICHTUNG UND VERFAHREN
DISPOSITIF ET PROCÉDÉ DE FORAGE, D'INJECTION ET D'EXTRACTION UNIFIÉS

(30) Priority: 16.07.2021 GB 202110278
(43) Date of publication of application: 22.05.2024
(73) Proprietor: HYPERTUNNEL IP LIMITED, Hampshire RG21 4RG (GB)
(72) Inventor: MEEKS, Alan, Basingstoke Hampshire RG21 4RG (GB)
(74) Representative: Handsome I.P. Ltd
(86) International application number: PCT/GB2022/051830
(87) International publication number: WO 2023/285831

(56) References cited:
- EP-B1- 0 259 755
- EP-B1- 0 329 835
- EP-B1- 0 371 463
- WO-A1-2013/170312
- WO-A2-2010/022322
- CN-A- 105 840 220
- CN-A- 107 476 814
- US-A1- 2011 168 398
- US-A1- 2014 328 641

## Description

The present invention relates generally to an integrated drilling and injection device and a method of injecting material into a substrate and finds particular, although not exclusive, utility in construction and repair of tunnels.

In sub-surface operations such as tunnelling, it is sometimes necessary to stabilise the surrounding geology, for instance by applying grouts and cement to cracks, fissures and voids. Grout injection lances and manchette tubes are well known in the strategic placement of grout in various circumstances. Common to these devices is a hollow pipe with holes located along its length. Flexible sleeves may optionally cover the holes to prevent material entering the pipe/lance via the holes. Such devices are inserted into channels that have been bored into a workspace such as a geological formation or artificial structure (e.g. concrete). Grout may then be pumped into the device under pressure, and thereby out of the holes and into the workspace.

EP0371463B1 and EP0259755B1 describe a drilling anchor comprising a shank, a drill bit, an internal passage, and an outer thread configured to match the inner thread of an adaptor component.

EP0329835B1 describes a drilling anchor comprising a shank, a drill bit, an internal passage, and an external thread.

CN107476814A discloses a drilling and injection device comprising a high-pressure control valve.

CN105840220A discloses a hollow grouting anchor body comprising an outer thread and an internal passage.

WO2010022322A2 describes a drill bit comprising a shank, a drill bit body, and an internal passage. Junk slots are provided between blades to remove excess material.

US2014328641A1 describes a drill bit comprising two flutes.

WO2013170312A1 relates to a drive machine for driving a rock bolt into a rock surface. An internal passage is present in the drive machine, including valves to split two different resins prior to injection through the rock bolt.

US2011168398A1 relates to an injection system for use with hollow self-drilling rock bolts. The system comprises a plurality of internal passages and at least one valve so that different types of fluid can be injected through the rock bolts at different stages of the installation process.

According to a first aspect of the present invention, there is provided an integrated drilling and injection device, comprising: a longitudinal shank having an internal passage extending from an open first end of the shank along an axis of the shank toward a second end of the shank; a drill bit located at a second end of the shank opposite the first end; at least one outlet in fluid communication between the internal passage and an exterior surface of the shank; and a valve within the internal passage, the valve configured to control passage of material within the internal passage.

In this way, the device may be driven into a substrate by rotating the shank about its axis, allowing the drill bit to gouge out material in front. Once the shank has been embedded to a desired depth, fluid may be injected into the substrate by passing along the internal passage and through the at least one outlet, without first having to remove the device and replace it with a separate injection component.

The longitudinal shank may comprise a substantially cylindrical shape, but in some embodiments may comprise any other form of substantially prism-like shape, such as a hexagonal prism shape.

The internal passage may be substantially cylindrical and/or prism-like; that is, having a cross-section that is substantially circular, square, star-shape, triangular, hexagonal, etc. The cross-section may vary along a length of the internal passage. The internal passage may be accessible from the first end of the shank. The internal passage may be orientated with an axis thereof (for example an axis of rotational symmetry and/or longitudinal axis) parallel to the axis of the shank (for example an axis of rotational symmetry and/or longitudinal axis).

The internal passage may terminate before reaching the second end of the shank. Alternatively, the internal passage may reach the second end of the shank, and/or the internal passage may be capped at the second end, for instance by the drill bit.

The drill bit may be formed in the second end of the shank; that is, the shank may comprise the drill bit. Alternatively, the drill bit may be attached/attachable to the shank; that is disposed on the second end of the shank. In particular, the drill bit may be removably attachable to the shank.

The drill bit may comprise at least one blade/edge for cutting the material into which it is driven, which may be disposed adjacent to a point of the drill bit. The drill bit may comprise only one, two or more blades.

The device may comprise at least one helical flute extending substantially from the at least one blade, and may extend along at least a portion of the shank. In this way, swarf created during the initial cutting process can be effectively removed. The flute(s) may extend between 10mm and 150mm from the at least one blade, in particular between 20mm and 100mm, more particularly between 25mm and 70mm, for example approximately 30mm, 40mm or 50mm. Each blade may be provided with a respective flute.

The blade may be configured to cut in a first rotational direction (e.g. clockwise). The flute may be configured to draw swarf away from the blade by twisting in a second rotational direction opposite the first rotational direction (e.g. anticlockwise).

The device may comprise at least one secondary flute having a helical shape. The secondary flute may be disposed on the shank, and may be spaced from the blade and/or drill bit. The secondary flute may be configured to draw material (such as water) toward the blade by twisting in the first rotational direction. The device may comprise only one, two or more secondary flutes.

The secondary flute may be located on a flute portion of the shank spaced from the first end of the shank, the flute portion of the shank having a diameter substantially greater than a diameter of the shank at the first end of the shank.

The at least one outlet may comprise at least one through-hole and/or at least one nozzle. The at least one outlet may comprise only one, two, three, four or more outlets.

The outlet may extend from the internal passage to an exterior surface of the shank. In particular, the outlet may extend to (one of) the helical flute(s), the drill bit, and/or a part of the shank spaced from (one of) the helical flute(s) and/or the drill bit. The outlet may extend from an end of internal passage, or from an intermediate portion of the internal passage spaced from each end. In this way, material can be deployed into the substrate by passing it through the internal passage and out through the or each outlet.

The at least one outlet may comprise only one outlet, or a plurality of outlets, for instance at least two, at least four, at least six or at least ten outlets. The outlets may be spaced along a length of the shank. The outlets may be spaced azimuthally around the longitudinal axis of the shank.

The or each outlet may be provided with a flexible sleeve to cover the holes to prevent material entering the internal passage via the holes.

The or each outlet may be provided with a frangible/sacrificial membrane to prevent undesired material passage therethrough. The membrane(s) may be configured to burst at a predefined pressure. In this way, all membranes could be configured to burst at the same pressure, or each membrane could be configured to burst at a unique pressure. In this way, material can be injected into areas before others.

The device may comprise only one valve within the internal passage, the valve configured to control passage of material within the internal passage. In alternative arrangements, the device may comprise a plurality of such valves.

In particular, the valve may comprise a one-way valve. The valve may be configured to prevent material in the substrate from passing through the internal passage. In this way, water that is naturally present in underlying geology may be prevented from entering a region from which the device is deployed, and recently deployed chemicals can be prevented from returning back into the region. Alternatively or additionally, the valve may be configured to convey material in the substrate through the internal passage. In this way, liquid and/or water and/or gas that is naturally present in underlying geology may be drained into a region from which the device is deployed. The valve may be actuatable, such that it may be opened or closed by control means, and/or its one-way direction may be reversed by control means.

The valve may comprise a shuttle valve; however, other forms of valve are envisaged.

The device may comprise a seal disposed on the shank. The seal may be spaced from the drill bit. The seal may be configured to form a barrier around the shank. The barrier may extend between the shank and a channel bored out by the drill bit.

The seal may extend radially outward from the shank. The seal may extend radially outward from the shank by a distance substantially further than the drill bit and/or blade. The seal may be an expanding seal, such that an extent by which the seal extends radially outward from the shank is variable, up to a maximum extent.

The seal may comprise a screw thread, in particular a self-tapping screw thread configured to engage with a periphery of the channel bored out by the drill bit.

The seal may be located at the first end of the shank. The seal may be located on an exterior of the shank. The seal may be removably attachable to the shank.

In this way, material within the bored channel may be prevented from passing up through the channel past the device.

The seal may be frangibly connected to the shank.

The shank may comprise a plurality of shank sections. In this way, the shank may be formed by connecting a plurality of shank sections together, for instance end-to-end. Adjacent shank sections may be connected together by any suitable connection means, in particular a screw thread. In particular, the screw thread of adjacent shank sections may be configured to engage when the first end of the shank is driven in the first rotational direction.

For example, a first shank section may include the second end of the shank and an opposing first shank section end. Similarly, a second shank section may include the first end of the shank and an opposing second shank section end. The second shank section end may be of reduced diameter and have an exterior thread to allow engagement with an interior of the first shank section. The exterior thread may be self-tapping. Alternatively, the first shank section end may include an internal thread configured to be mateable with the exterior thread.

In this way, a device of arbitrary length may be formed by simply connecting multiple shank sections together. For example, the device may be between 100mm and 5000mm in length. The at least one outlet may be located in any of the shank sections. In particular, where there is a plurality of outlets, the outlets may be located on different shank sections.

The shank sections may be releasably connectable to one another, or may be permanently connectable, by any conventional means.

The device may be provided with a screw drive at the first end, for instance to allow the device to be rotated by a screwdriver. In the context of this application, a screwdriver is simply any device for engaging with a screw drive any imparting rotational motion through the connection, and should not be limited to manual apparatuses, or even hand-held apparatuses.

The screw drive may comprise a socket for insertion of a screw driver therein; alternatively or additionally, the screw driver may comprise a socket for receiving the screw drive therein (such as a bolt head being received in a spanner). The screw drive may comprise a cross-section that is square, hexagonal, star-shape or any other conventional shape.

The screw drive may be releasably connectable to the shank, for instance via a screw thread as described above with reference to the shank sections.

The device may comprise any suitable material, but is preferably formed from injection moulded plastic such as ABS, Nylon 66 (RTM), glass or carbon fibre reinforced materials, Nylon 6 (RTM) and/or PEEK. However, metal is also contemplated as a construction material, for instance by die casting (e.g. in zinc or aluminium). In any event, the drill bit, and in particular the blade, may comprise metal in a conventional manner.

The size of the device is only limited by its application and the physical requirements of the process. Where the device is being used in underground geology, such that grouts are to be injected through the device, the internal passage should have a diameter of at least 6mm.

According to a second aspect of the present invention, there is provided a system for injection of material into a substrate, the system comprising: the device according to the first aspect; an access surface through which the device is to be deployed; and a device deployment apparatus for driving the device through the access surface into a substrate and injecting material into the internal passage.

The access surface may be part of a pipe, for instance un underground (e.g. HDPE) pipe. However, in some embodiments, the access surface may merely be a surface of the substrate.

The device deployment apparatus may comprise means to rotate the device about its axis, such as a motor. The device deployment apparatus may comprise means to push the device axially. The device deployment apparatus may comprise means to inject material into the internal passage.

The device deployment apparatus may comprise means to connect a second shank section to a first shank section that has been driven through the access surface. In this way, the device deployment apparatus can be used in restricted spaces.

The device deployment apparatus may comprise a single unit, or may comprise a driving unit and a respective injection unit.

According to a third aspect of the present invention, there is provided a method of injecting material into a substrate, the method comprising the steps of: providing the device of the first aspect; driving the device into a substrate; and injecting material into the internal passage.

In addition to the use of cements and grouts to stabilise surrounding geology (e.g. ground consolidation), for instance in tunnelling applications, the method may be employed in construction and repair of artificial structures (including ancient buildings), targeted grouting, waterproofing and leak stopping (for instance, by injecting PU foam to stop water flow), and hydraulic fracturing (e.g. by injecting high-pressure water).

As the device of the first aspect is sacrificial, in as much as that it will be left in situ after deployment, the device may further comprise embedded tools/technology therein. These could include pressure release valves (where gas or water build up may compromise structures), explosive charges, RFID/NFC tags, active/passive location devices, thermal sensors, pressure sensors, movement/accelerometer sensors, acoustic sensors for seismic studies, electrical resistivity tomography emitters/detectors, and/or mesh nodes to connect sensors wireless devices (e.g. via a LAN).

The materials injected may include, as an alternative to grouts/cements and/or PU foams, epoxies, acrylics, polyesters and polyurethanes.

As a specific example, cameras could be passed through the interior channel and outlet in a similar manner to an endoscope.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.
Figure 1 is a perspective view of drill component.
Figure 2 is a perspective view of the drill component of figure 1, with a sealing component attached thereto.
Figure 3 is a partial cutaway view of the drill component and sealing component of figure 2.
Figure 4 is a cross-sectional view of the drill component and sealing component of figures 2 and 3.
Figure 5 is a perspective view of a valve component used in the sealing component of figures 2 to 4.
Figure 6 is a perspective view of an extension tube for use with the drill component of figure 1.
Figure 7 is a perspective view of the extension tube of figure 6, with a sealing component attached thereto.
Figure 8 is a cross-sectional view similar to figure 4, but with the extension tube of figure 6 disposed between the drill component and sealing component.
Figure 9 is a cross-sectional view similar to figure 8, but with two extension tubes disposed between the drill component and sealing component.
Figure 10 is a cross-sectional view of an alternative drill component being driven into a substrate from behind a barrier.
Figure 11 is a cross-sectional view of the alternative drill component of figure 10, having been fully driven into the substrate.

The present invention will be described with respect to certain drawings but the invention is not limited thereto but only by the claims. The drawings described are only schematic and are non-limiting. Each drawing may not include all of the features of the invention and therefore should not necessarily be considered to be an embodiment of the invention. In the drawings, the size of some of the elements may be exaggerated and not drawn to scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that operation is capable in other sequences than described or illustrated herein. Likewise, method steps described or claimed in a particular sequence may be understood to operate in a different sequence.

Moreover, the terms top, bottom, over, under and the like in the description and the claims are used for descriptive purposes and not necessarily for describing relative positions. It is to be understood that the terms so used are interchangeable under appropriate circumstances and that operation is capable in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Similarly, it is to be noticed that the term "connected", used in the description, should not be interpreted as being restricted to direct connections only. Thus, the scope of the expression "a device A connected to a device B" should not be limited to devices or systems wherein an output of device A is directly connected to an input of device B. It means that there exists a path between an output of A and an input of B which may be a path including other devices or means. "Connected" may mean that two or more elements are either in direct physical or electrical contact, or that two or more elements are not in direct contact with each other but yet still co-operate or interact with each other. For instance, wireless connectivity is contemplated.

Similarly, it should be appreciated that in the description various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Moreover, the description of any individual drawing or aspect should not necessarily be considered to be an embodiment of the invention. Rather, as the following claims reflect, inventive aspects lie in fewer than all features of a single foregoing disclosed embodiment. Thus, the claims following the detailed description are hereby expressly incorporated into this detailed description, with each claim standing on its own as a separate embodiment of this invention.

In the description provided herein, numerous specific details are set forth. However, it is understood that embodiments of the invention may be practised without these specific details. In other instances, well-known methods, structures and techniques have not been shown in detail in order not to obscure an understanding of this description.

In the discussion of the invention, unless stated to the contrary, the disclosure of alternative values for the upper or lower limit of the permitted range of a parameter, coupled with an indication that one of said values is more highly preferred than the other, is to be construed as an implied statement that each intermediate value of said parameter, lying between the more preferred and the less preferred of said alternatives, is itself preferred to said less preferred value and also to each value lying between said less preferred value and said intermediate value.

The use of the term "at least one" may mean only one in certain circumstances. The use of the term "any" may mean "all" and/or "each" in certain circumstances.

The principles of the invention will now be described by a detailed description of at least one drawing relating to exemplary features. It is clear that other arrangements can be configured according to the knowledge of persons skilled in the art without departing from the underlying concept or technical teaching, the invention being limited only by the terms of the appended claims.

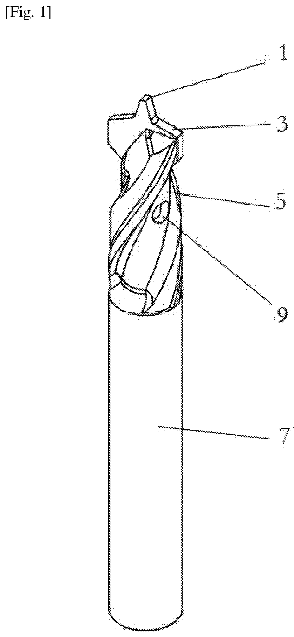

Figure 1 is a perspective view of drill component having a tip 1, two opposing rotary cutting blades 3, two helical flutes 5, each extending from a respective one of the rotary cutting blades 3 around the shank and away from the tip 1. A blind shank body section 7 is provided beyond the flutes 5. Respective through holes 9 are disposed within each flute 5, and extend into an internal axial passage (not shown).

The drill component can be placed with its tip 1 against a surface, such as the interior surface of a HDPE pipe, and pushed into the surface. As the drill component is rotated clockwise about its longitudinal axis, the two blades 3 cut into the surface producing swarf. The swarf is drawn away from the blades 3 by the flutes 5.

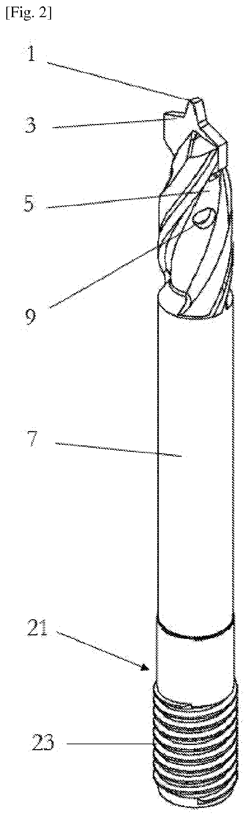

Figure 2 is a perspective view of the drill component of figure 1, with a sealing component 21 attached to an end of the body section 7 opposite the tip 1. The sealing component 21 includes a self-tapping external thread 23 such that, as the shank body section 7 passes through hole in the surface formed by the blades 3, the screw thread 23 bites into the surface to engage and couple the sealing component 21 with the surface, thereby forming a seal against unwanted material passage out of the hole.

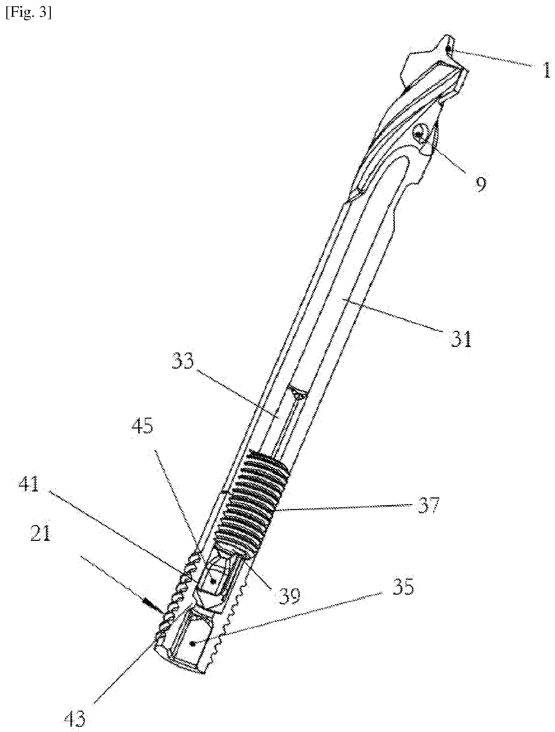

Figure 3 is a partial cutaway view of the drill component and sealing component of figure 2 showing the internal passage 31 to which the through-holes 9 are connected. The internal passage 31 has a circular cross section from the through holes 9 back toward its open end. However, at the end of the internal passage opposite the tip 1, the internal passage 31 has a square internal cross-section 33 which can act as a screw drive for rotating the drill component. The internal passage 31 continues through the sealing component 21 to an open end where a similar square internal cross-section 35 is present, for the same purpose.

The drill component and the sealing component 21 are connected via a coupling member 37 having an external thread and a hollow axial passage 39. Corresponding internal threads on the interior of the internal passage 31 of adjacent parts of the drill component and the sealing component 21 operatively engage with one another.

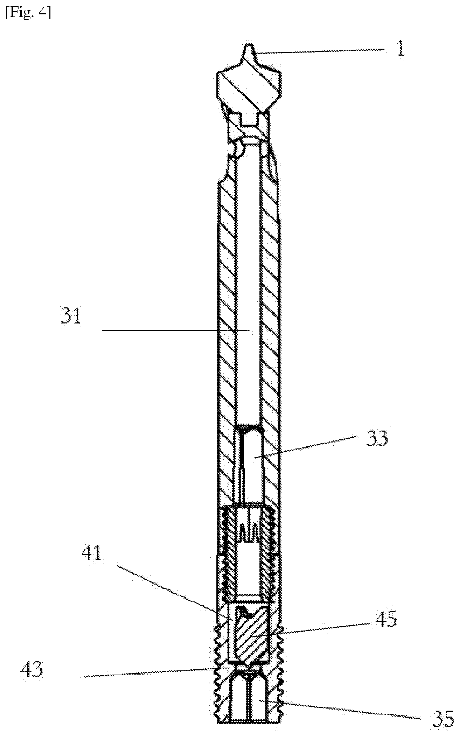

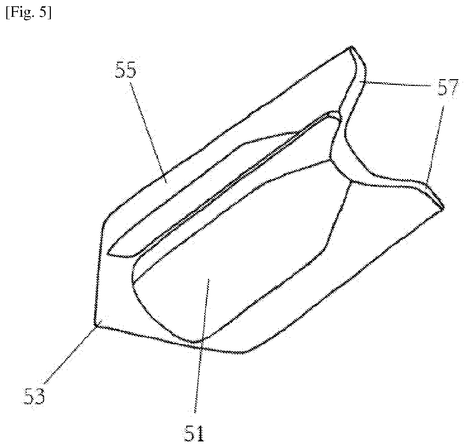

Between the coupling member 37 and the square internal cross-section 35 of the sealing component 21 is an enlarged portion 41 of the internal passage 31, and a constriction 43 adjacent to the square internal cross-section 35. Within the enlarged portion 41 is disposed a valve component 45, which will be described in more detail below with reference to figures 4 and 5.

Figure 4 is a cross-sectional view of the drill component and sealing component of figures 2 and 3. The valve component 45 is free to move axially within the enlarged portion 41, and in particular is capable of being pushed by fluid passing through the internal bore 31. The valve component 45 is configured such that when fluid is moving through the internal passage 31 toward the tip 1, the valve permits flow past. However, if fluid attempts to move through the internal passage 31 from the tip, the valve component 45 engages with the constriction 43 to prevent flow therethrough.

Figure 5 is a perspective view of the valve component 45 and shows it having a central core 51 with a narrow, pointed end 53 for engaging in the constriction 43 and effectively sealing it against flow therethrough. Three longitudinal ribs 55 prevent the central core 51 from engaging with the inner surface of the internal passage 31, and permit fluid flow past. The longitudinal ribs 55 terminate in respective feet 57 that are configured to sit on the coupling member 37, whilst allowing fluid to flow past.

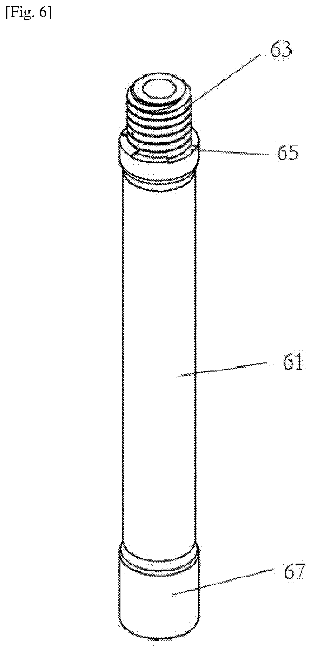

Figure 6 is a perspective view of an extension tube for use with the drill component of figure 1. Like the drill component, the extension tube has a blind shank body section 61, but is of slightly reduced diameter to the blind shank body section 7 of the drill component.

At its upper end in the figure is provided a first coupling 63 that includes an external thread identical in form to that of the coupling member 37 described above. In this way, the extension tube can be coupled to the drill component via the same internal threads that coupled it to coupling member 37 as described in relation to figure 3.

As can be seen in this figure, stepped teeth 65 surround the first coupling to engage with corresponding teeth on the drill component (not shown) to prevent loosening / detachment of the extension tube from the drill component, once connected.

At its lower end in the figure is provided a second coupling 67 that is identical to the corresponding portion of the drill component; that is, including a square internal cross-section (not shown) which can act as a screw drive for rotating the extension tube, including internal threads to cooperatively engage with, for example, the coupling member 37 which has an external thread as described above, and including the stepped teeth (not shown) referred to above.

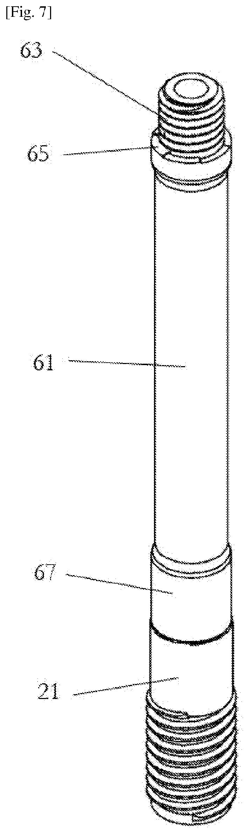

Figure 7 is a perspective view of the extension tube of figure 6, with the sealing component 21 attached thereto. Ad discussed, the second coupling 67 is identical to the coupling at the base of the drill component. In this way, any extension tube may be interposed between any drill component and any sealing component 21.

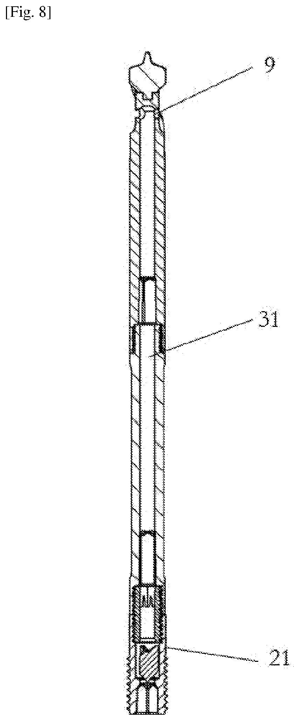

Figure 8 is a cross-sectional view similar to figure 4, but with the extension tube of figure 6 disposed between the drill component and sealing component.

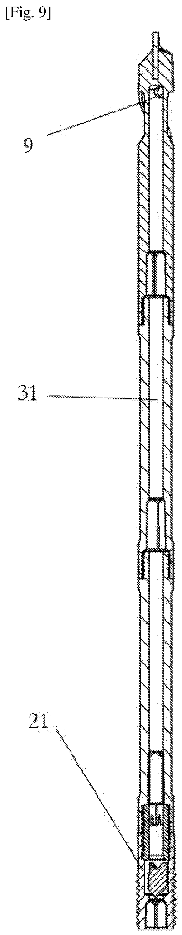

Figure 9 is a cross-sectional view similar to figure 8, but with two extension tubes disposed between the drill component and sealing component. This is possible because of the identical couplings discussed above.

As can be seen, the internal passage 31 extends from the drill component to the sealing component 21, through the extension component.

In all of the figures, the through holes 9 are shown at the tip-end of the passage 31; however, in some alternative embodiments the through holes 9 may be spaced from this tip, either in addition to those at the tip-end, or in addition to those at the tip-end.

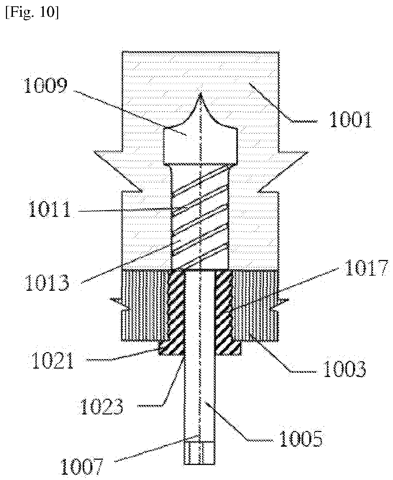

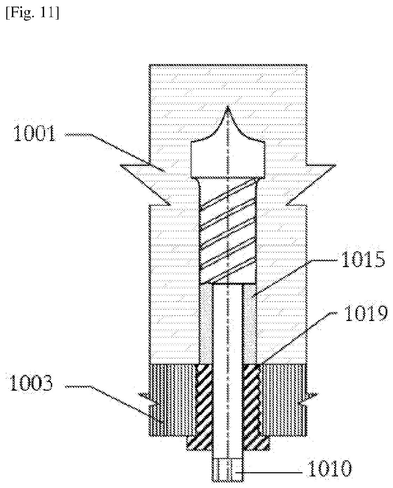

Figure 10 is a cross-sectional view of an alternative drill component being driven into a substrate 1001 from behind a barrier 1003, and figure 11 shows a similar view with the drill component having been driven fully into the substrate 1001. Various features of the drill component, such as an internal passage and an outlet in fluid communication with the internal passage, have been excluded from figures 10 and 11 for clarity, but it is to be understood that these and other features can be incorporated in the manner discussed above.

The substrate 1001 may comprise for example rock, sand, and/or any other typical geology. The barrier 1003 may comprise a wall of a HDPE pipe, and the drill component may be driven into the substrate 1001 from inside the HDPE pipe. In particular, the drill component may be driven by a device (not shown) connected to a shank 1005 of the drill component, the device may be configured to rotate the drill about a longitudinal axis 1007 such that a drill bit 1009 bores a hole first through the barrier 1003 and subsequently into the substrate 1001. In particular, such a driving device may be connected by screw-drive coupling 1010.

Helical flutes 1011 formed into a body 1013 behind the drill bit 1009 draw swarf away from the drill bit parallel to the axis 1007. The shank 1005 is of a reduced diameter relative to both the drill bit 1009 and the body 1013 into which the helical flutes 1011 are formed. In this way, swarf may collect in the hole 1015 drilled by the drill bit.

Around the shank 1005 is provided a sealing device 1017 having a circular internal bore with a diameter equal to that of the shank, and an exterior surface with a diameter equal to that of the drill bit 1009 (and/or the hole 1015 formed by the drill bit). On the exterior surface is optionally provided a self-tapping screw thread 1019 configured to bite into the barrier 1003, and engage therewith. A flange 1021 is provided on an opposing end of the sealing device 1017 to the drill bit, such that the flange 1021 is configured to abut the side of the barrier 1003 opposing the substrate 1001 to prevent any further rotation of the sealing device 1017.

In use, the sealing device 1017 is frangibly connected to the shank 1005 such that the sealing device 1017 rotates therewith when driven by the driving means. In this way, the sealing device may be provided with sufficient torque from the driving means, via the shank 1005, for its self-tapping screw thread 1019 to bite into the barrier 1003. The frangible connection 1023 is configured such that, when the flange 1021 abuts the barrier 1003 such that further engagement into the barrier 1003 is prevented, the frangible connection 1023 breaks to allow continued rotation and axial motion of the shank 1005 within the sealing device 1017. The frangible connection 1023 may comprise a small connecting piece, as is well understood in the art.

## Claims

1. An integrated drilling and injection device, comprising:
a longitudinal shank (7) having an internal passage (31) extending from an open first end of the shank (7) along an axis of the shank (7) toward a second end of the shank (7);
a drill bit (1) located at a second end of the shank (7) opposite the first end; and
at least one outlet (9) in fluid communication between the internal passage (31) and an exterior surface of the shank (7),
**characterised by** a valve (45) within the internal passage (31), the valve (45) configured to control passage of material within the internal passage (31).

2. The integrated drilling and injection device of claim 1, wherein the drill bit (1) comprises:
a blade (3) that is configured to cut in a first rotational direction; and
a secondary flute (5) on the shank (7), the secondary flute (5) having a helical shape;
wherein the secondary flute (5) is spaced from the drill bit (1) and twists in the first rotational direction such that when the device is rotated in the first rotational direction, material such as water is drawn toward the blade (3).

3. The integrated drilling and injection device of claim 2, wherein the secondary flute (5) is located on a flute portion of the shank (7) spaced from the first end of the shank (7), the flute portion of the shank (7) having a diameter substantially greater than a diameter of the shank (7) at the first end of the shank (7).

4. The integrated drilling and injection device of any preceding claim, further comprising a seal (21) disposed on the shank (7), spaced from the drill bit (1), the seal (21) configured to form a barrier around the shank (7), between the shank (7) and a channel bored out by the drill bit (1).

5. The integrated drilling and injection device of claim 4, wherein the seal (21) is frangibly connected to the shank (7).

6. The integrated drilling and injection device of any preceding claim, wherein the shank (7) comprises a plurality of shank sections.

7. The integrated drilling and injection device of any preceding claim, further comprising embedded tools/technology therein.

8. A system for injection of material into a substrate, the system comprising:
the device according to any preceding claim;
an access surface through which the device is to be deployed; and
a device deployment apparatus for driving the device through the access surface into a substrate and injecting material into the internal passage.

9. A method of injecting material into a substrate, the method comprising the steps of:
providing the device of any one of claims 1 to 7;
driving the device into a substrate; and
injecting material into the internal passage (31).

## Patentansprüche

1. Ein integriertes Bohr- und Injektionsgerät, umfassend:
einen länglichen Schaft (7) mit einem inneren Durchgang (31), der sich von einem offenen ersten Ende des Schafts (7) entlang einer Achse des Schafts (7) zu einem zweiten Ende des Schafts (7) erstreckt;
einen Bohrer (1), der sich am zweiten Ende des Schafts (7) gegenüber dem ersten Ende befindet; und
mindestens einen Auslass (9) in fluidischer Verbindung zwischen dem inneren Durchgang (31) und einer äußeren Oberfläche des Schafts (7),
**gekennzeichnet durch** ein Ventil (45) innerhalb des inneren Durchgangs (31), wobei das Ventil (45) konfiguriert ist, um den Durchgang von Material innerhalb des inneren Durchgangs (31) zu steuern.

2. Das integrierte Bohr- und Injektionsgerät nach Anspruch 1, wobei der Bohrer (1) umfasst:
eine Klinge (3), die in einer ersten Drehrichtung schneidet; und
eine sekundäre Nut (5) am Schaft (7), wobei die sekundäre Nut (5) eine spiralförmige Form hat;
wobei die sekundäre Nut (5) vom Bohrer (1) beabstandet ist und in der ersten Drehrichtung windet, so dass bei Drehung des Geräts in der ersten Drehrichtung Material wie Wasser zur Klinge (3) gezogen wird.

3. Das integrierte Bohr- und Injektionsgerät nach Anspruch 2, wobei die sekundäre Nut (5) auf einem Nutabschnitt des Schafts (7) angeordnet ist, der vom ersten Ende des Schafts (7) beabstandet ist, wobei der Nutabschnitt des Schafts (7) einen Durchmesser hat, der wesentlich größer ist als der Durchmesser des Schafts (7) am ersten Ende des Schafts (7).

4. Das integrierte Bohr- und Injektionsgerät nach einem der vorhergehenden Ansprüche, weiter umfassend eine Dichtung (21), die am Schaft (7) angeordnet ist, beabstandet vom Bohrer (1), wobei die Dichtung (21) konfiguriert ist, um eine Barriere um den Schaft (7) zu bilden, zwischen dem Schaft (7) und einem vom Bohrer (1) gebohrten Kanal.

5. Das integrierte Bohr- und Injektionsgerät nach Anspruch 4, wobei die Dichtung (21) zerbrechlich mit dem Schaft (7) verbunden ist.

6. Das integrierte Bohr- und Injektionsgerät nach einem der vorhergehenden Ansprüche, wobei der Schaft (7) eine Vielzahl von Schaftabschnitten umfasst.

7. Das integrierte Bohr- und Injektionsgerät nach einem der vorhergehenden Ansprüche, weiter umfassend integrierte Werkzeuge/Technologie darin.

8. Ein System zur Injektion von Material in ein Substrat, das System umfassend:
das Gerät nach einem der vorhergehenden Ansprüche;
eine Zugangsebene, durch die das Gerät eingesetzt werden soll; und
ein Geräteeinsatzapparat, um das Gerät durch die Zugangsebene in ein Substrat zu treiben und Material in den inneren Durchgang zu injizieren.

9. Ein Verfahren zur Injektion von Material in ein Substrat, wobei das Verfahren die Schritte umfasst:
Bereitstellen des Geräts nach einem der Ansprüche 1 bis 7;
Eintreiben des Geräts in ein Substrat; und
Injizieren von Material in den inneren Durchgang (31).

## Revendications

1. - Dispositif de forage et d'injection intégrés, comprenant :
une tige longitudinale (7) ayant un passage interne (31) s'étendant à partir d'une première extrémité ouverte de la tige (7) le long d'un axe de la tige (7) vers une seconde extrémité de la tige (7) ;
un trépan (1) situé à une seconde extrémité de la tige (7) opposée à la première extrémité ; et
au moins une sortie (9) en communication fluidique entre le passage interne (31) et une surface extérieure de la tige (7),
**caractérisé par** une vanne (45) à l'intérieur du passage interne (31), la vanne (45) étant configurée pour contrôler un passage de matière à l'intérieur du passage interne (31).

2. - Dispositif de forage et d'injection intégrés selon la revendication 1, dans lequel le trépan (1) comprend :
une lame (3) qui est configurée pour couper dans un premier sens de rotation ; et
une cannelure secondaire (5) sur la tige (7), la cannelure secondaire (5) ayant une forme hélicoïdale ;
la cannelure secondaire (5) étant espacée du trépan (1) et se tordant dans le premier sens de rotation de telle sorte que, lorsque le dispositif est amené à tourner dans le premier sens de rotation, de la matière telle que de l'eau est tirée vers la lame (3).

3. - Dispositif de forage et d'injection intégrés selon la revendication 2, dans lequel la cannelure secondaire (5) est située sur une partie cannelure de la tige (7) espacée de la première extrémité de la tige (7), la partie cannelure de la tige (7) ayant un diamètre sensiblement plus grand qu'un diamètre de la tige (7) à la première extrémité de la tige (7).

4. - Dispositif de forage et d'injection intégrés selon l'une quelconque des revendications précédentes, comprenant en outre un joint (21) disposé sur la tige (7), à distance du trépan (1), le joint (21) étant configuré pour former une barrière autour de la tige (7), entre la tige (1) et un canal foré par le trépan (1).

5. - Dispositif de forage et d'injection intégrés selon la revendication 4, dans lequel le joint (21) est relié de manière fragile à la tige (7).

6. - Dispositif de forage et d'injection intégrés selon l'une quelconque des revendications précédentes, dans lequel la tige (7) comprend une pluralité de sections de tige.

7. - Dispositif de forage et d'injection intégrés selon l'une quelconque des revendications précédentes, comprenant en outre des outils/technologies incorporés à l'intérieur de celui-ci.

8. - Système d'injection de matière dans un substrat, le système comprenant :
le dispositif selon l'une quelconque des revendications précédentes ;
une surface d'accès à travers laquelle le dispositif est à déployer ; et
un appareil de déploiement de dispositif pour entraîner le dispositif à travers la surface d'accès dans un substrat et injecter de la matière dans le passage interne.

9. - Procédé d'injection de matière dans un substrat, le procédé comprenant les étapes :
disposer le dispositif selon l'une quelconque des revendications 1 à 7 ;
entraîner le dispositif dans un substrat ; et
injecter de la matière dans le passage interne (31).
